# EUROPEAN PATENT SPECIFICATION

(11) **EP 2 745 608 B1**
(45) Date of publication and mention of the grant of the patent: **18.03.2015**
(21) Application number: 13703156.3
(22) Date of filing: 03.01.2013
(51) Int. Cl.: H04W 76/06

(54) **METHOD AND APPARATUS FOR RESOURCE RELEASE IN A WIRELESS COMMUNICATION NETWORK**
VERFAHREN UND VORRICHTUNG ZUR RESSOURCENFREIGABE IN EINEM DRAHTLOSEN KOMMUNIKATIONSNETZWERK
PROCÉDÉ ET APPAREIL DE LIBÉRATION DE RESSOURCES DANS UN RÉSEAU DE COMMUNICATION SANS FIL

(30) Priority: 25.01.2012 US 201261590585 P
(43) Date of publication of application: 25.06.2014
(73) Proprietor: Telefonaktiebolaget L M Ericsson (publ), 164 83 Stockholm (SE)
(72) Inventor: CAVERNI, Alessandro, S-118 65 Stockholm (SE); PRADAS, Jose Luis, S-11622 Stockholm (SE)
(74) Representative: Kühn, Friedrich Heinrich
(86) International application number: PCT/SE2013/050002
(87) International publication number: WO 2013/112096

(56) References cited:
- WO-A2-2010/087590
- WO-A2-2010/123228
- US-A1- 2009 086 671
- ERICSSON ET AL: "SI attachment during CCCH transmission", 3GPP DRAFT; R2-120373_SI_ATTACHMENT_FOR_CCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 29 January 2012 (2012-01-29), XP050564957, [retrieved on 2012-01-29]
- INTEL CORPORATION (UK) LTD: "Recollection of agreements on implicit release of common E-DCH resources and open issues", 3GPP DRAFT; R2-110942, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 13 February 2011 (2011-02-13), XP050493333, [retrieved on 2011-02-13]

## Description

### RELATED APPLICATIONS

This application claims priority from the U.S. provisional patent application filed on 25 January 2012 and assigned App. No. 61/590,585.

### TECHNICAL FIELD

The present invention generally relates to wireless communication networks, and particularly relates to the use of radio resources in a wireless communication network

### BACKGROUND

With respect to at least some of the subject matter herein, the following documents serve as helpful references: 3GPP TS 25.321 v8.14.0, "Medium Access Control (MAC) protocol specification" and 3GPP TS 25.331 v8.17.0, "Radio Resource Control (RRC); Protocol specification". For example, these documents and in particular the latter one of these documents explain certain aspects of "connected" and "idle" modes in the context of RRC, including providing details regarding the various states of connected mode operation. The various connected mode states include CELL_DCH (Dedicated Channel), CELL_FACH (Forward access channel), CELL_PCH (Cell Paging channel) and URA_PCH (URA Paging channel).

Information regarding Enhanced Dedicated Transport Channel (E-DCH) details is also of interest. Broadly, the E-DCH is an uplink channel that can be used by user equipments or "UEs" on both scheduled and unscheduled bases. For Frequency Division Duplex (FDD), E-DCH transmission by a UE in the CELL_FACH state and in the Idle Mode is a mechanism to improve the performance of the random access procedure. The Enhanced Uplink in CELL_FACH state and Idle mode combines the Release 99 random access power ramping phase with E-DCH transmission on common E-DCH resources.

The network can configure up to thirty-two (32) common E-DCH resources in one cell. The configuration information is broadcast by system info 5/5bis. The E-DCH random access procedure consists of the following steps: access request preamble transmissions with preamble power ramping as in Rel99; acquisition indication and assignment of a common E-DCH resource; data transmission over the assigned E-DCH channel, which is used to carry either a Common Control Channel (CCCH) transmission or Dedicated Traffic Channel / Dedicated Control Channel (DTCH/DCCH) transmission; and release of the common E-DCH resource.

For DCCH/DTCH transmissions, common E-DCH resources can be released in the following ways: (1) explicitly by the Node B by sending a release command on the E-DCH Absolute Grant Channel (E-AGCH) after or at the end of collision resolution; (2) if configured by the network, implicitly by the UE-where the UE releases E-DCH resources after an empty buffer status has been reported in the Scheduling Information (SI) to the Node B, and after the last Hybrid Automatic Repeat reQuest (HARQ) process has been acknowledged or after a maximum number of retransmission has been reached; (3) if contention resolution fails i.e. no absolute grant is received by the UE; (4) during state transition from CELL_FACH to CELL_DCH (Dedicated Channel); or (5) upon a radio link failure.

For CCCH transmissions, common E-DCH resources can be released in the following ways: (1) the UE releases the resources after an empty buffer status has been reported in the SI to the Node B, and after the last HARQ process has been acknowledged or after a maximum number of retransmission has been reached; (2) after a period of time configured by the network; and (3) upon a radio link failure.

Section 11.2.2A "Control of Enhanced Uplink in CELL_FACH state and Idle mode for FDD mode" of 3GPP TS 25.321 describes how the allocated common E-DCH resources are released. In the context of a CCCH transmission, the E-DCH enhanced physical random access transmission procedure is completed with release of the allocated common E-DCH resource, if one of the following conditions is fulfilled:
- in case of CCCH transmission, if the maximum E-DCH resource allocation for CCCH has been reached, then this triggers a CMAC-STATUS-Ind which informs the RRC about the Enhanced Uplink in CELL_FACH state and Idle mode process termination; or
- in case of CCCH transmission, if the transmission E-DCH Buffer status is 0 bytes, then the MAC-STATUS-Ind primitive indicates to the Radio Link Control (RLC) layer for each logical channel that no Protocol Data Unit (PDU) shall be transferred to MAC. If the transmission E-DCH Buffer status is 0 bytes and no MAC-i PDUs are left for (re-)transmission in MAC, then this triggers a CMAC-STATUS-Ind which informs the RRC about the Enhanced Uplink in CELL_FACH state and Idle mode process termination.

The "Maximum E-DCH resource allocation for CCCH" is received by higher layers, and is broadcasted by the network in the "Common E-DCH system info" in SIB5 or SIB5bis-see 3GPP TS25.331, where "SIB" denotes System Information Block. The value of "Maximum E-DCH resource allocation for CCCH" can be set to any of these figures (expressed in Transmission Time Intervals (TTIs)): 8, 12, 16, 20, 24, 32, 40, and 80.

For further reference, MAC-i/is, MAC-c MAC-d are different entities of the MAC layer, defined as follows:
- MAC-d is the MAC entity that handles the dedicated logical channels DCCH and DTCH and maps them onto the E-DCH;
- MAC-c/sh/m, is the MAC entity that handles the paging channel (PCH), the forward access channel (FACH), random access channel (RACH), the downlink shared channel (DSCH), which exists only in TDD mode, and the uplink shared channel (USCH), which exists only in TDD mode; and
- MAC-e/es and MAC-i/is are the MAC entities that handle the enhanced dedicated transport channel (E-DCH).

Regarding MAC-i/is segmentation, the MAC-i/is entity has the possibility of transmitting only one part (segment) of a MAC-c or MAC-d PDU, if the entire PDU does not fit into a MAC-is SDU. More details regarding how a MAC-i PDU is built can be found in TS25.321 section 9.1.5.

Further, 3GPP TS 25.321 defines for FDD the Total E-DCH Buffer Status (TEBS) as follows:
The TEBS field identifies the total amount of data available across all logical channels for which reporting has been requested by the RRC and indicates the amount of data in number of bytes that is available for transmission and retransmission in RLC layer. If MAC-i/is is configured, it also includes the amount of data that is available for transmission in the MAC-i/is segmentation entity. When MAC is connected to an "Acknowledged Mode" (AM) RLC entity, control PDUs to be transmitted and RLC PDUs outside the RLC Tx (transmit) window shall also be included in the TEBS. RLC PDUs that have been transmitted but not negatively acknowledged by the peer entity shall not be included in the TEBS.

Section 11.8.1.6 "Scheduling Information reporting" of 3GPP TS 25.321 v8.14.0, specifies how the Scheduling Information (SI) shall be triggered in case of CCCH transmission in Cell_FACH state:
For FDD and for CCCH transmission in CELL_FACH state and Idle mode, the transmission of SI shall only be triggered when TEBS becomes zero and the MAC-i PDU containing the last data is being transmitted. The SI is transmitted with the MAC-i PDU carrying the last data, if the current serving grant is sufficient to carry the SI with the last remaining data. Otherwise, the empty buffer status report is transmitted separately with the next MAC-i PDU.

The allocated common E-DCH resource shall be used by MAC either to carry only CCCH transmission or only DTCH/DCCH transmission, but not both. After completing the transmission on CCCH, there are several mechanisms to release of the common E-DCH resources (as outlined in the previous section). Particularly, the resources will be released after a period equal to "Maximum E-DCH resource allocation for CCCH", as calculated from the allowed start time of the E-DCH transmission. This period can be up to 80 TTI, i.e., 800 msec in case of 10 msec TTI. Or, if the TEBS value becomes zero after transmitting the last MAC-i PDU, the UE releases the resources after an empty buffer status has been reported in the SI to the Node B, and after the last HARQ process has been acknowledged or the maximum number of retransmission has been reached.

One issue recognized herein relating to the TEBS-based release is that the TEBS includes the total amount of data available across all the logical channels and the amount of data available for transmission in the MAC-i/is segmentation entity. The completion of CCCH transmission therefore does not guarantee the release of the common E-DCH resources, because the TEBS value may not be zero (0), in case where there is data for one or more of the logical channels other than the CCCH. This circumstance may arise, for example, when performing a CELL_UPDATE, which is sent over CCCH. In particular, if user data arrives prior to sending the CELL UPDATE, the TEBS may not be zero.

On the other hand, data corresponding to other logical channels (i.e. DCCH and DTCH) cannot be transmitted using the same common E-DCH resources used for CCCH transmission. The UE will first have to release the common E-DCH resources. The release will happen when the timeout condition is fulfilled, i.e. at the expiry of the "Maximum E-DCH resource allocation for CCCH".

Following the current specification, in the case outlined above, TEBS will not be zero and, therefore, the UE will not send the SI with TEBS equal to zero. Hence, the common E-DCH resources will not be released even if the UE cannot transmit any other data using those resources. Consequently, the common E-DCH resources will only be freed when the UE has reached the "Maximum E-DCH resource allocation for CCCH".

This delay in the release represents a waste of resources, both for the network and the UE. It also delays the subsequent transmission of DCCH/DTCH, since such transmission may happen only after the common E-DCH resources used for CCCH transmission are released.

Turning to the DTCH/DCCH transmission case, one of the mechanisms used to release common E-DCH resources is the implicit release with E-DCH transmission continuation backoff: implicit resource release is enabled only if "E-DCH transmission continuation back off" is not set to "infinity".

If implicit resource release is enabled, then in case of DTCH/DCCH transmission, the timer Tb is set to "E-DCH transmission continuation back off" value, when TEBS is 0 byte and
the last generated MAC-i PDU with higher layer data is provided with the PHY-data-REQ primitive to the physical layer for transmission.

If TEBS ◊ 0 byte is detected while timer Tb is running, then the timer is stopped and uplink data transmission on the common E-DCH resource continues.

If a MAC-ehs PDU is received while timer Tb is running, then the timer is re-started.

If the "E-DCH transmission continuation back off" value is set to "0" or if timer Tb expires the MAC-STATUS-Ind primitive indicates to RLC for each logical channel that no PDUs shall be transferred to MAC. TEBS = 0 byte is reported to the Node B MAC as SI in a MAC-i PDU. If the "B-DCH transmission continuation back off" value is set to '0", then the SI shall be transmitted with the MAC-i PDU carrying the last DCCH/DTCH data, if the current serving grant is sufficient to carry the SI in the same MAC-i PDU together with the remaining DCCH/DTCH data. Otherwise, the empty buffer status report is transmitted separately with the next MAC-i PDU.

CMAC-STATUS-Ind which informs the RRC about the Enhanced Uplink in CELL_FACH state and Idle mode process termination is triggered when the empty buffer status has been reported and no MAC-i PDU is left in any HARQ process for (re-) transmission.

It is recognized herein that this problem is similar to the one described for the CCCH case, i.e. the TEBS includes the total amount of data available across all the logical channels and the amount of data available for transmission in the MAC-i/is segmentation entity. The completion of DCCH/DTCH transmission therefore does not always trigger the start of the timer Tb or the immediate release of the resources (if Tb = 0) because the TEBS value may not be 0, in case of data from other logical channels than DCCH/DTCH. Again, the non-zero TEBS because of data for a logical channel other than the CCCH may arise when a periodic CELL_UPDATE, which has to be sent over CCCH, is triggered just before the UE completes its DCCH/DTCH transmission. In this case, the TEBS value would not be zero after the completion of the DCCH/DTCH transmission.

3GPP Tdoc R2-110942 "Recollection of agreements on implicit release of common E-DCH resources and open issues" provides a recollection of agreements made in 3GPP on implicit resource release including triggering transmission of Scheduling Information and implicit release of resources when TEBS becomes zero.

### SUMMARY

According to the teachings herein, a UE is configured to perform a method for releasing common E-DCH resources used for a CCCH transmission to a network. According to the method, the UE triggers transmission of scheduling information (S1) to the network upon transmission of the last CCCH data available at the UE, regardless of whether or not a Total E-DCH Buffer Status (TEBS) at the UE equals zero. The UE is further configured to release the common E-DCH resources responsive to sending the SI. In an example, the UE triggers the transmission of SI upon transmission of a MAC-i PDU containing the last CCCH data available at the UE, regardless of whether or not TEBS equals zero at the UE. The method also may include the UE setting TEBS to zero in the SI reported to the network, regardless of whether TEBS equals zero at the UE.

Further, in at least one embodiment, or in combination with any of the above embodiments, the method comprises including the SI in the MAC-i PDU containing the last CCCH data available at the UE, if the current serving grant of the UE allows the MAC-i PDU to include the SI, or including the SI in a MAC-i PDU following the MAC-i PDU containing the last CCCH data available at the UE, if the current serving grant of the UE does not allow the MAC-i PDU containing the last CCCH data to also include the SI.

Further, in at least one embodiment, or in combination with any of the above embodiments, the method includes releasing the common E-DCH resources when, following transmission of the SI, a last HARQ process running at the UE has been acknowledged or a predefined maximum number of retransmissions by the UE have been reached.

In an example configuration, the UE comprises a communication transceiver for communicating with a supporting wireless communication network, i.e., transmitting signals to and receiving signals from the wireless communication network, and further includes one or more processing circuits. The processing circuit(s) are configured to implement the above method according to any of the disclosed embodiments, and variations or combinations thereof. In a non-limiting example, the one or more processing circuits comprise one or more microprocessor-based circuits or other digital processing circuitry that are/is configured to: trigger transmission of SI to the network upon transmission of a MAC-i PDU containing the last CCCH data available at the UE regardless of whether or not a Total E-DCH Buffer Status (TEBS) of the UE is zero; and releasing the common E-DCH resources.

The one or more processing circuits may be configured to include a TEBS value in SI transmitted to the network that is set to zero, regardless of whether the TEBS of the UE is zero or not. The processing circuit(s) of the UE also may be configured to include the SI in the MAC-i PDU containing the last CCCH data available at the UE, if the current serving grant of the UE allows the MAC-i PDU to include the SI, or to include the SI in a MAC-i PDU following the MAC-i PDU containing the last CCCH data available at the UE, if the current serving grant of the UE does not allow the MAC-i PDU containing the last CCCH data to also include the SI.

Further, in at least one embodiment, or in combination with any of the above embodiments, the one or more processing circuits of the UE are configured to release the common E-DCH resources when, following transmission of the SI, a last HARQ process has been acknowledged or a predefined maximum number of retransmissions have been reached.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Fig. 1 is a block diagram of one embodiment of a network that includes a user equipment, "UE", configured according to example teachings herein.
Fig. 2 is a block diagram of one embodiment of the UE introduced in Fig. 1.
Fig. 3 is a logic flow diagram of one embodiment of a method at a UE of releasing common Enhanced Dedicated Channel, "E-DCH", resources as taught herein.
Fig. 4 is another logic flow diagram, which can be understood as a more detailed example of the method introduced in Fig. 3.

### DETAILED DESCRIPTION

As noted earlier herein, with the current specifications for CCCH transmissions, the transmission of Scheduling Information (SI) by a UE shall be triggered only when TEBS becomes zero at the UE. However, TEBS may be non-zero because of other data (DTCH/DCCH) awaiting transmission at the UE-i.e., even though the last CCCH data available at the UE has been transmitted, TEBS will not be zero if there is DTCH/DCCH data available for transmission. However, it is recognized herein that the common E-DCH resources used for the CCCH transmission cannot be used for such other data and therefore should be released as quickly as possible. Advantageously, then in one or more embodiments herein, a UE is configured to trigger transmission of SI when the MAC-i PDU containing the last MAC-c PDU (the last CCCH data) is being transmitted, regardless of whether or not TEBS equals zero at the UE.

When this situation occurs and the SI is transmitted, the UE in at least one embodiment shall force the TEBS value to be set to zero. The SI is transmitted with the MAC-i PDU carrying the last CCCH data, if the current serving grant is sufficient to carry the SI with that last remaining data. Otherwise, the SI including the empty buffer status report is transmitted separately with the next MAC-i PDU.

Current specifications also state that, in case of a CCCH transmission, if TEBS equals zero, then the MAC-STATUS-Ind primitive indicates to the RLC layer for each logical channel that no PDU shall be transferred to MAC. In contrast, as taught herein, in case of CCCH transmission, when the MAC-i PDU containing the last MAC-c PDU is being transmitted, the MAC-STATUS-Ind primitive indicates to RLC for each logical channel that no PDU shall be transferred to MAC once there are no MAC-c PDUs left for transmission.

Still further, current specifications state that if the TEBS is 0 bytes and no MAC-i PDUs are left for (re-)transmission in the MAC layer, then this triggers a CMAC-STATUS-Ind, which informs the RRC about the Enhanced Uplink in CELL_FACH state and Idle mode process termination. In contrast, in one or more embodiments of these teachings, when the MAC-i PDU containing the last MAC-c PDU has been transmitted by the UE and no MAC-i PDUs are left for (re-) transmission in the MAC layer at the UE, this condition triggers a CMAC-STATUS-Ind, which informs the RRC about the Enhanced Uplink in CELL_FACH state and Idle mode process termination.

Additionally, in the current specification, the TEBS field included in SI reports identifies the total amount of data available across all logical channels for which reporting has been requested by the RRC and indicates the amount of data in number of bytes that is available for transmission and retransmission by the UE in the RLC layer. If MAC-i/is is configured, the TEBS field also indicates the amount of data that is available for transmission in the MAC-i/is segmentation entity. When MAC is connected to an Acknowledged Mode (AM) RLC entity, control PDUs to be transmitted and RLC PDUs outside the RLC Tx (transmit) window shall also be accounted for in the TEBS at the UE. RLC PDUs that have been transmitted but not negatively acknowledged by the peer entity shall not be included in the TEBS.

In contrast, according to one or more embodiments taught herein, in case of DCCH/DTCH transmission in Enhanced Uplink in the CELL_FACH state, the TEBS field identifies the total amount of data available across all logical channels, except for the CCCH, for which reporting has been requested by the RRC and indicates the amount of data in number of bytes that is available for transmission and retransmission in RLC layer (except the RLC data associated with the CCCH). If MAC-i/is is configured, it also includes the amount of data that is available for transmission in the MAC-i/is segmentation entity, excluding MAC-c data.

When MAC is connected to an AM RLC entity, control PDUs to be transmitted and RLC PDUs outside the RLC Tx window shall also be included in the TEBS. RLC PDUs that have been transmitted but not negatively acknowledged by the peer entity shall not be included in the TEBS.

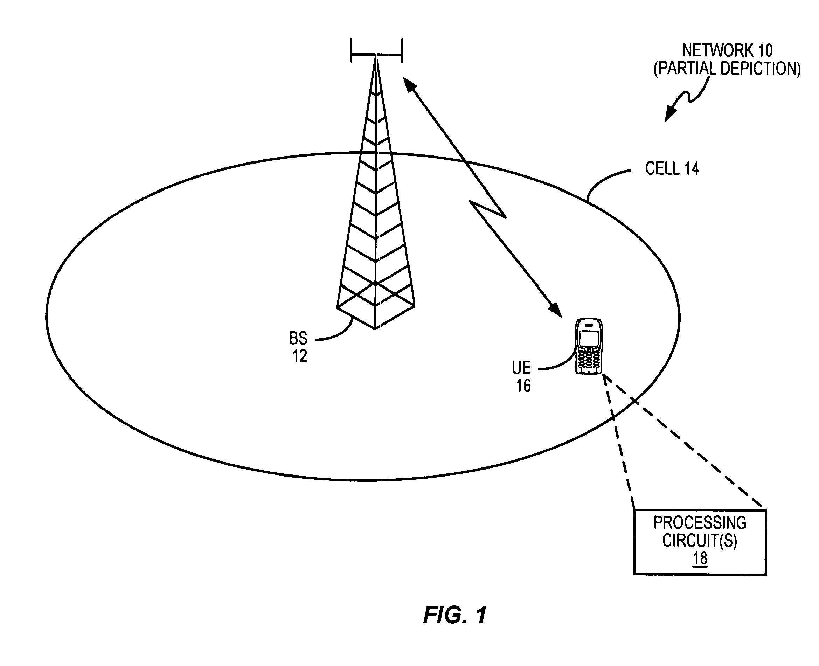

With these example teachings in mind, Fig. 1 illustrates a wireless communication network 10, which may be a UTRAN or E-UTRAN network. While the illustration is partial-i.e., the network 10 may include any number of additional Radio Access Network (RAN) nodes and Core Network (CN) nodes, the illustration provides a helpful context by depicting a base station (BS) 12 and its associated cell 14, in which one or more UEs 16 operate. The base station (BS) 12 may be, in non-limiting examples, a NodeB in a UTRAN network or an eNodeB (eNB) in an E-UTRAN network.

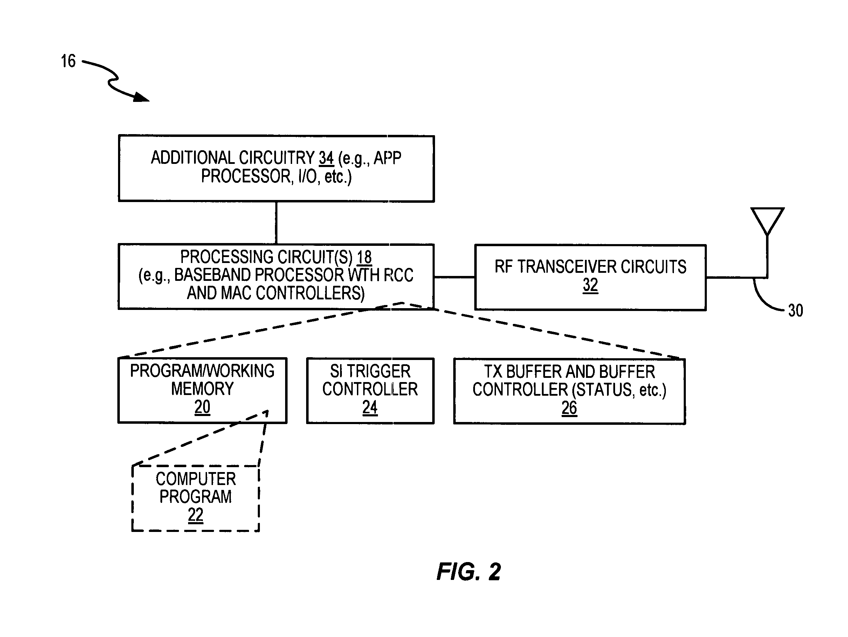

The UE 16 operates according the teachings presented herein based on the configuration of its one or more processing circuits 18. In turn, Fig. 2 provides example details for the physical and/or functional implementation of the UE 16, including the one or more processing circuits 18.

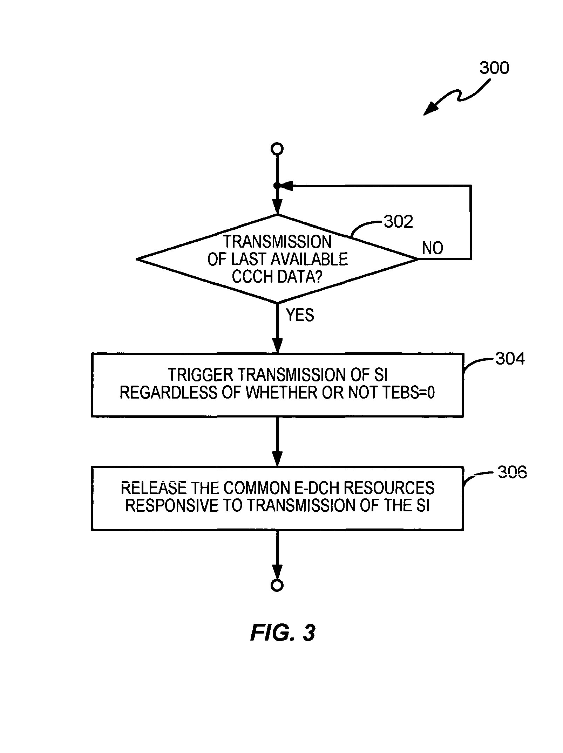

According to the example of Fig. 2, the one or more processing circuits 18 may comprise one or more microprocessor-based circuits that include or are associated with program and working memory 20 (which may be multiple memory elements, including non-volatile memory for storage of a computer program 22). For example, the computer program 22 includes computer program instructions that, when executed by the processing circuit(s) 18, configure its processing circuitry to carry out the method 300 shown in Fig. 3, or variations or extensions thereof.

Thus, the processing circuit(s) 18 can be understood as including any number of physical or functional processing units or controllers that are configured to carry out the method 300. For example, the processing circuit(s) 18 may be configured to implement a trigger controller 24 and a TX buffer controller 26 that implement the method 300, possibly with the cooperation of other processing units implemented via the processing circuit(s) 18, including those involved in the RRC/MAC/PHY signaling and protocol control.

That is, the processing circuits 18 implement the UE-side MAC, RLC, and other protocol layer entities discussed herein. In general, the UE 16 includes one or more antennas 30 for receiving/transmitting signals, and transceiver circuits 32 operatively connected to the antenna(s) 30. The UE 16 also may include additional processing circuitry 34, e.g., one or more "application" processors for running high-level applications and/or input/output (I/O) circuitry. Of course, the extent and nature of such additional circuitry 34 will depend on the UE's features and intended use.

However implemented, the processing circuit(s) 18 is/are configured to implement the improved resource releasing method(s) described herein for common E-DCH resources used for CCCH transmission. In an example embodiment, the processing circuit(s) 18 trigger transmission of SI to the network 10 upon transmission of a MAC-i PDU containing the last CCCH data available at the UE 16, regardless of whether or not the TEBS of the UE 16 is zero. The processing circuit(s) 18 correspondingly release the common E-DCH resources that were allocated for the CCCH transmission, even though there may be DCCH/DTCH data accounted for in the TEBS-i.e., even though the actual TEBS at the UE 16 is not zero.

The SI trigger controller 24 may be configured to trigger the SI transmission toward the network 10 according to the foregoing example. Further, the TX buffer and buffer controller 26 may be configured to manage data buffering for transmissions on the E-DCH and/or to control the TEBS value at the UE and in the SI reporting sent to the network 10.

More broadly, in one or more embodiments, the one or more processing circuits 18 are operatively associated with the transceiver circuits 32 and are configured to: trigger transmission of SI to the network 10, upon transmission by the UE 16 using common E-DCH resources of the last CCCH data available at the UE 16. This triggering of the SI is done regardless of whether or not the TEBS of the UE 16 is zero. Correspondingly, the one or more processing circuits 18 are configured to release the common E-DCH resources responsive to the transmission of the SI.

Further, in at least some embodiments, the one or more processing circuits 18 are configured to buffer, as needed, DTCH data and/or DCCH data in an E-DCH buffer that also buffers the last CCCH data, such that the TEBS at the UE 16 will not be zero when the transmission of the SI is triggered, to the extent that the E-DCH buffer includes any DTCH or DCCH data.

As for triggering the SI, the one or more processing circuits 18 may be configured to trigger the transmission of the SI to the network 10 upon transmission of a MAC-i PDU containing the last CCCH data available at the UE 16, regardless of whether or not the TEBS of the UE 16 is zero. Further, the one or more processing circuits 18 may be further configured to, responsive to transmitting the last MAC-i PDU, indicate to an RLC layer entity at the UE 16 that no PDU for each logical channel shall be transferred to the MAC layer, once there are no MAC-c PDUs left for transmission.

Also, as earlier noted, the one or more processing circuits 18 may be further configured to report the TEBS of the UE 16 as zero in the SI transmitted to the network 10, regardless of whether the TEBS of the UE 16 is zero.

In the same or another embodiment, the one or more processing circuits 18 are configured to include the SI in the MAC-i PDU containing the last CCCH data available at the UE 16, if the current serving grant of the UE 16 allows the MAC-i PDU to include the SI, and to include the SI in a MAC-i PDU following the MAC-i PDU containing the last CCCH data available at the UE 16, if the current serving grant of the UE 16 does not allow the MAC-i PDU containing the last CCCH data to also include the SI. Further, the one or more processing circuits 18 may be configured to release the common E-DCH resources responsive to the transmission of the SI, based on being configured to release the common E-DCH resources after the transmission of the SI, and after a last Hybrid Automatic Repeat reQuest, "HARQ", process running at the UE 16 has been acknowledged or after predefined maximum number of retransmissions by the UE 16 has been reached.

With these example embodiments in mind, the UE 16 can be understood as implementing a basic configuration wherein, for CCCH transmissions, the UE 16 does not consider its TEBS value for triggering the SI transmission to the network 10. Instead, the UE 16 triggers the SI when the MAC-i PDU containing the last MAC-c PDU-i.e., the last available CCCH data at the UE 16-is being transmitted to the network 10. This last transmission means that there is no more CCCH data at the UE 16 to be transmitted, which means that there are no more MAC-c PDUs left for transmission, although this does not necessarily mean that TEBS equals zero at the UE 16.

Turning to Fig. 3 in more detail, the illustrated method 300 serves as an example processing flow at the UE 16. In particular, the method (300) is performed by the UE 16, for releasing common E-DCH resources after a CCCH transmission to the network 10. The method 300 includes triggering transmission of SI to the network 10 upon transmission of the last CCCH data available at the UE 16 ("YES" from Block 302), regardless of whether or not the TEBS of the UE 16 is zero (Block 304). The method 300 further includes releasing the common E-DCH resources responsive to the transmission of the SI (Block 306).

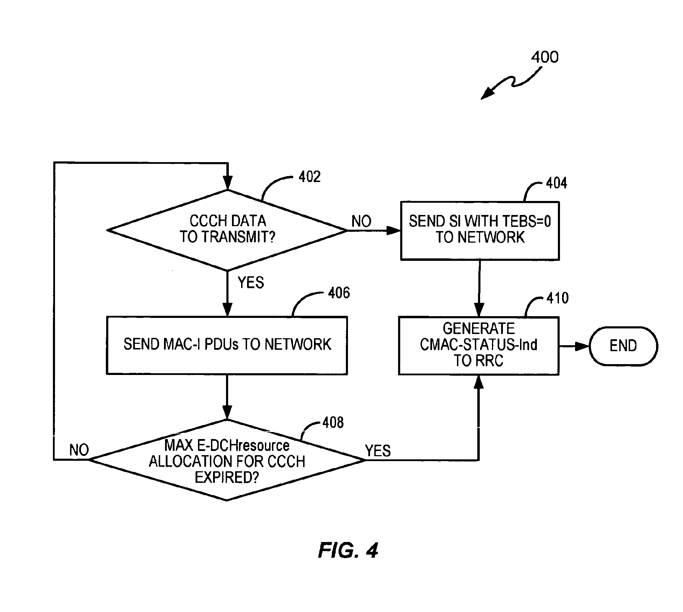

The method 300 thus stands as an example of the improved procedure for release of common E-DCH resources as taught herein. Fig. 4 provides a further method and it should be understood that depicted method 400 is a more detailed example of the method 300.

In the context of the method 400, a processing unit or other entity realized in the processing circuit(s) 18 of the UE 16 will check whether there is CCCH data to transmit, which may be done for instance by means of the MAC-DATA-Req, MAC-DATA-Ind primitives between MAC layer and RLC layer (Block 402).

If there is no CCCH data to transmit to the network 10 ("No" from Block 402), the UE 16 will trigger the transmission of SI to the network 10 with TEBS = 0 indicated in that SI transmission and will generate a CMAC-STATUS-Ind to the RRC layer, in order to release UE internal resources (Block 404). Notably, the SI transmission and TEBS = 0 indication are performed by the UE 16 based on the transmission of the last available CCCH data, and without regard to whether the actual TEBS at the UE 16 equals zero, e.g., without regard to whether the actual value of TEBS at the UE 16 is non-zero because of DCCH/DTCH data buffered for transmission on the uplink to the network 10.

If there is more CCCH data to transmit ("Yes" from Block 402), the UE 16 will build and send MAC-i PDUs to the network 10-via physical layer/L1-until either the timer "Max E-DCHresource allocation for CCCH" has expired or there is no more CCCH data to transmit (Blocks 406 and 408). If the timer "Max E-DCHresource allocation for CCCH" expires before the completion of the CCCH transmission, the UE 16 will generate a CMAC-STATUS-Ind to RRC in order to release internal resources (Block 410).

With the above examples in mind, various embodiments of the present invention will be appreciated as offering a number of advantages. Non-limiting example advantages include one or more of the following: (1) better utilization of network resources; and (2) potentially faster transmission of DCCH/DTCH data.

Regarding advantage (1), it is recognized herein that if the TEBS is not zero after the completion of a current CCCH transmission, then in conventional operation neither the UE nor the network will release the common E-DCH resources, and instead will wait until the expiry of timer "Maximum E-DCH resource allocation for CCCH." This period of time may be up 800 msec and the unreleased network resources cannot be used by other UEs during that period of time. In contrast to the conventional operation, a UE 16 configured according to the teachings herein allows for an immediate release of the common E-DCH resources, as soon as they are not needed anymore-i.e., as soon as the last CCCH data available at the UE 16 has been transmitted.

Regarding advantage (2) above, this advantage ties in with the earlier point made herein that, for a given allocation of common E-DCH resources, those resources can be used to carry only CCCH transmissions or only DCCH/DTCH transmissions, but not both. Thus, after a CCCH transmission, the UE 16 has to wait for the release of the common E-DCH resources used for CCCH transmission before it can get new E-DCH resources for a subsequent DCCH/DTCH transmission.

Of course, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method (300) in a user equipment, "use", (16) of releasing common Enhanced Dedicated Channel, "E-DCH", resources after a Common Control Channel, "CCCH" transmission to a wireless communication network (10), said method (300) comprising:
triggering (304) transmission of scheduling information, "SI", to the wireless communication network (10) upon transmission (302) of the last CCCH data available at the UE (16), regardless of whether or not a Total E-DCH Buffer Status, "TEBS", of the UE (16) is zero;
reporting in the SI that is transmitted to the wireless communication network (10) that the TEBS of the UE (16) equals zero, regardless of whether the TEBS of the UE (16) is zero; and
releasing (306) the common E-DCH resources responsive to the transmission of the SI.

2. The method (300) of claim 1, further comprising buffering, as needed, Dedicated Traffic Channel, "DTCH", data and Dedicated Control Channel, "DCCH", data in an E-DCH buffer that also buffers the last CCCH data, such that the TEBS will not be zero when the transmission of the SI is triggered, to the extent that the E-DCH buffer includes any DTCH or DCCH data.

3. The method (300) of claim 1 or 2, wherein triggering (304) the transmission of the SI comprise triggering transmission of the SI to the wireless communication network (10) upon transmission of a MAC-i PDU containing the last CCCH data available at the UE (16) regardless of whether or not the TEBS of the UE (16) is zero.

4. The method (300) of claim 3, further comprising, responsive to transmitting the last MAC-i PDU, indicating to a Radio Link Control, "RLC", layer entity at the UE (16) that no PDU for each logical channel shall be transferred to the MAC layer, once a MAC-c buffer contains zero bytes.

5. The method (300) of any preceding claim, further comprising including the SI in the MAC-i PDU containing the last CCCH data available at the UE (16), if a current serving grant of the UE (16) allows the MAC-i PDU to include the SI, and including the SI in a MAC-i PDU, following the MAC-i PDU containing the last CCCH data available at the UE (16), if the current serving grant of the UE (16) does not allow the MAC-i PDU containing the last CCCH data to also include the SI,

6. The method (300) of any preceding claim, wherein releasing (306) the common E-DCH resources responsive to the transmission of the SI, comprises releasing the common E-DCH resources after the transmission of the SI and after a last Hybrid Automatic Repeat reQuest, "HARQ", process running at the UE (16) has been acknowledged or a predefined maximum number of retransmissions by the UE (16) has been reached.

7. A user equipment, "UE", (16) configured for operation in a wireless communication network (10) and comprising:
transceiver circuits (32) for transmitting signals to the wireless communication network (10) and receiving signals from the wireless communication network (10); and one
or more processing circuits (18) that are operatively associated with the transceiver circuits (32) and configured to:
trigger transmission of scheduling information "SI", to the wireless communication network (10) upon transmission by the UE (16) using common Enhanced Dedicated Channel, "E-DCH", resources of a last Common Control Channel, "CCCH", data available at the UE (16), said triggering done regardless of whether or not a Total E-DCH Buffer Status, "TEBS", of the UE (16) is zero;
report the TEBS of the UE (16) as zero in the SI transmitted to the wireless communication network (10), regardless of whether the TEBS of the UE (16) is zero; and
release the common E-DCH resources responsive to the transmission of the SI.

8. The UE (16) of claim 7, wherein the one or more processing circuits (18) are further configured to buffer, as needed, Dedicated Traffic Channel, "DTCH", data and Dedicated Control Channel, "DCCH", data in an E-DCH buffer that also buffers the last CCCH data, such that the TEBS will not be zero when the transmission of the SI is triggered, to the extent that the E-DCH buffer includes any DTCH or DCCH data.

9. The UE (16) of claim 7 or 8, wherein the one or more processing circuits (18) are configured to trigger the transmission of the SI to the wireless communication network (10) upon transmission of a MAC-i PDU containing the last CCCH data available at the UE regardless of whether or not the TEBS of the UE (16) is zero.

10. The UE (16) of claim 9, wherein the one or more processing circuits (18) are further configured to, responsive to transmitting the last MAC-i PDU, indicate to a Radio Link Control, "RLC", layer entity at the UE (16) that no PDU for each logical channel shall be transferred to the MAC layer.

11. The UE (16) of any of claims 7-10, wherein the one or more processing circuits (18) are configured to include the SI in the MAC-i PDU containing the last CCCH data available at the UE (16), if a current serving grant of the UE (16) allows the MAC-i PDU to include the SI, and to include the SI in a MAC-i PDU following the MAC-i PDU containing the last CCCH data available at the UE (16), if the current serving grant of the UE (16) does not allow the MAC-i PDU containing the last CCCH data to also include the SI.

12. The UE (16) of any of claims 7-11, wherein the one or more processing circuits (18) are configured to release the common E-DCH resources responsive to the transmission of the SI, by releasing the common E-DCH resources after the transmission of the SI and after a last Hybrid Automatic Repeat reQuest, "HARQ", process running at the UE (16) has been acknowledged or a predefined maximum number of retransmissions by the UE (16) has been reached.

## Patentansprüche

1. Verfahren (300) in einer Benutzereinrichtung, UE, (16) zur Freigabe von gemeinsamen E-DCH (erweiterter dedizierter Kanal)-Ressourcen nach einer CCCH (gemeinsamer Steuerkanal)- Übertragung zu einem drahtlosen Kommunikationsnetz (10), wobei das Verfahren (300) umfasst:
Auslösen (304) von Übertragung von Zeitplaninformationen, SI, zum drahtlosen Kommunikationsnetz (10) bei Übertragung (302) der letzten CCCH-Daten, die an der UE (16) verfügbar sind, ungeachtet dessen, ob ein Gesamt-E-DCH-Pufferstatus, TEBS, der UE (16) null ist oder nicht;
Melden in den SI, die zum drahtlosen Kommunikationsnetz (10) gesendet werden, dass der TEBS der UE (16) null entspricht, ungeachtet dessen, ob der TEBS der UE (16) null ist; und
Freigeben (306) der gemeinsamen E-DCH-Ressourcen in Reaktion auf die Übertragung der SI.

2. Verfahren (300) nach Anspruch 1, ferner umfassend ein Puffern nach Bedarf von DTCH (dedizierter Verkehrskanal)-Daten und DCCH (dedizierter Steuerkanal)-Daten in einem E-DCH-Puffer, der auch die letzten CCCH-Daten puffert, derart dass der TEBS bei Auslösung der Übertragung der SI nicht null ist, sofern der E-DCH-Puffer irgendwelche DTCH- oder DCCH-Daten umfasst.

3. Verfahren (300) nach Anspruch 1 oder 2, wobei das Auslösen (304) der Übertragung der SI ein Auslösen der Übertragung der SI zum drahtlosen Kommunikationsnetz (10) bei Übertragung einer MAC-i-PDU umfasst, welche die letzten CCCH-Daten enthält, die an der UE (16) verfügbar sind, ungeachtet dessen, ob der TEBS der UE (16) null ist oder nicht.

4. Verfahren (300) nach Anspruch 3, ferner umfassend in Reaktion auf das Senden der letzten MAC-i-PDU ein Anzeigen einer Instanz der Funkübertragungssteuerungs, RLC,-Schicht an der UE (16), dass keine PDU für jeden logischen Kanal an die MAC-Schicht übertragen werden soll, sobald ein MAC-c-Puffer null Bytes enthält.

5. Verfahren (300) nach einem der vorhergehenden Ansprüche, ferner umfassend ein Aufnehmen der SI in die MAC-i-PDU, welche die letzten CCCH-Daten enthält, die an der UE (16) verfügbar sind, wenn eine aktuelle Versorgungsbewilligung der UE (16) zulässt, dass die MAC-i-PDU die SI aufnimmt, und Aufnehmen der SI in eine MAC-i-PDU, die auf die MAC-i-PDU folgt, welche die letzten CCCH-Daten enthält, die an der UE (16) verfügbar sind, wenn die aktuelle Versorgungsbewilligung der UE (16) nicht zulässt, dass die MAC-i-PDU, welche die letzten CCCH-Daten enthält, auch die SI aufnimmt.

6. Verfahren (300) nach einem der vorhergehenden Ansprüche, wobei das Freigeben (306) der gemeinsamen E-DCH-Ressourcen in Reaktion auf die Übertragung der SI ein Freigeben der gemeinsamen E-DCH-Ressourcen nach der Übertragung der SI und nach dem Bestätigen eines letzten HARQ (hybride automatische Wiederholungssendungsanforderung)-Prozesses, der an der UE (16) ausgeführt wird, oder nach Erreichen einer vordefinierten maximalen Anzahl von Wiederholungssendungen durch die UE (16) umfasst.

7. Benutzereinrichtung, UE, (16), die zum Betrieb in einem drahtlosen Kommunikationsnetz (10) ausgelegt ist und umfasst:
Sendeempfängerschaltungen (32) zum Senden von Signalen zum drahtlosen Kommunikationsnetz (10) und Empfangen von Signalen vom drahtlosen Kommunikationsnetz (10); und
eine oder mehrere Verarbeitungsschaltungen (18), die mit den Sendeempfängerschaltungen (32) funktionell assoziiert und konfiguriert sind zum:
Auslösen von Übertragung von Zeitplaninformationen, SI, zum drahtlosen Kommunikationsnetz (10) bei Übertragung (16) durch die UE (16) unter Verwendung von gemeinsamen E-DCH (erweiterter dedizierter Kanal)-Ressourcen von letzten CCCH (gemeinsamer Steuerkanal)-Daten, die an der UE (16) verfügbar sind, wobei das Auslösen ungeachtet dessen erfolgt, ob ein Gesamt-E-DCH-Pufferstatus, TEBS, der UE (16) null ist oder nicht;
Melden des TEBS der UE (16) als null in den SI, die zum drahtlosen Kommunikationsnetz (10) gesendet werden, ungeachtet dessen, ob der TEBS der UE (16) null ist; und
Freigeben der gemeinsamen E-DCH-Ressourcen in Reaktion auf die Übertragung der SI.

8. UE (16) nach Anspruch 7, wobei die eine oder die mehreren Verarbeitungsschaltungen (18) ferner so konfiguriert sind, dass sie DTCH (dedizierter Verkehrskanal)-Daten und DCCH (dedizierter Steuerkanal)-Daten nach Bedarf in einem E-DCH-Puffer puffern, der auch die letzten CCCH-Daten puffert, derart dass der TEBS bei Auslösung der Übertragung der SI nicht null ist, sofern der E-DCH-Puffer irgendwelche DTCH- oder DCCH-Daten umfasst.

9. UE (16) nach Anspruch 7 oder 8, wobei die eine oder die mehreren Verarbeitungsschaltungen (18) so konfiguriert sind, dass sie die Übertragung der SI zum drahtlosen Kommunikationsnetz (10) bei Übertragung einer MAC-i-PDU, welche die letzten CCCH-Daten enthält, die an der UE verfügbar sind, ungeachtet dessen auslösen, ob der TEBS der UE (16) null ist oder nicht.

10. UE (16) nach Anspruch 9, wobei die eine oder die mehreren Verarbeitungsschaltungen (18) so konfiguriert sind, dass sie in Reaktion auf das Senden der letzten MAC-i-PDU einer Instanz der Funkübertragungssteuerungs, RLC,-Schicht an der UE (16) anzeigen, dass keine PDU für jeden logischen Kanal an die MAC-Schicht übertragen werden soll.

11. UE (16) nach einem der Ansprüche 7 - 10, wobei die eine oder die mehreren Verarbeitungsschaltungen (18) so konfiguriert sind, dass sie die SI in die MAC-i-PDU, welche die letzten CCCH-Daten enthält, die an der UE (16) verfügbar sind, aufnehmen, wenn eine aktuelle Versorgungsbewilligung der UE (16) zulässt, dass die MAC-i-PDU die SI aufnimmt, und die SI in eine MAC-i-PDU aufnehmen, die auf die MAC-i-PDU folgt, welche die letzten CCCH-Daten enthält, die an der UE (16) verfügbar sind, wenn die aktuelle Versorgungsbewilligung der UE (16) nicht zulässt, dass die MAC-i-PDU, welche die letzten CCCH-Daten enthält, auch die SI aufnimmt.

12. UE (16) nach einem der Ansprüche 7 - 11, wobei die eine oder die mehreren Verarbeitungsschaltungen (18) so konfiguriert sind, dass sie die gemeinsamen E-DCH-Ressourcen in Reaktion auf die Übertragung der SI durch Freigeben der gemeinsamen E-DCH-Ressourcen nach der Übertragung der SI und nach dem Bestätigen eines letzten HARQ (hybride automatische Wiederholungssendungsanforderung)-Prozesses, der an der UE (16) ausgeführt wird, oder nach Erreichen einer vorbestimmten maximalen Anzahl von Wiederholungssendungen durch die UE (16) freigeben.

## Revendications

1. Procédé (300) dans un équipement d'utilisateur UE (16) de libération de ressources de canal dédié amélioré large bande, E-DCH, après une transmission de canal de commande commun CCCH à un réseau de communication sans fil (10), ledit procédé (300) comprenant de :
déclencher (304) une transmission d'information de programmation SI au réseau de communication sans fil (10) lors de la transmission (302) des dernières données CCCH disponibles au niveau de l'UE (16), sans tenir compte de ce que ou non un statut de mémoire tampon total E-DCH, TEBS, de l'UE (16) est zéro ;
rapporter dans le SI qui est transmis au réseau de communication sans fil (10) que le TEBS de l'UE (16) est égal à zéro, sans tenir compte de ce que ou non le TEBS de l'UE (16) est zéro ; et
libérer (306) les ressources E-DCH communes en réponse à la transmission du SI.

2. Procédé (300) selon la revendication 1, comprenant en outre de mettre en mémoire tampon, le cas échéant, les données de canal de trafic dédié, DTCH, et les données de canal de commande dédié, DCCH, dans une mémoire tampon E-DCH que met aussi en mémoire tampon les dernières données CCCH, de sorte que le TEBS ne sera pas zéro quand la transmission du SI est déclenchée, dans la mesure où la mémoire tampon E-DCH inclut n'importe quelles données DTCH ou DCCH.

3. Procédé (300) selon la revendication 1 ou 2, dans lequel déclencher (304) la transmission du SI comprend de déclencher la transmission du SI au réseau de communication sans fil (10) lors de la transmission d'un MAC-i PDU contenant les dernières données CCCH disponibles au niveau de l'UE (16) sans tenir compte de ce que ou non le TEBS de l'UE (16) est zéro.

4. Procédé (300) selon la revendication 3, comprenant en outre, en réponse à la transmission du dernier MAC-i PDU, d'indiquer à une entité de couche de commande de liaison radio RLC au niveau de l'UE (16) qu'aucun PDU pour chaque canal logique ne devrait être transféré à la couche MAC, dès qu'une mémoire tampon MAC-c contient zéro octets.

5. Procédé (300) selon une quelconque des revendications précédentes, comprenant en outre d'inclure le SI dans le MAC-i PDU contenant les dernières données CCCH disponibles au niveau de l'UE (16), si une autorisation de desserte actuelle de l'UE (16) autorise le MAC-i PDU à inclure le SI, et inclure le SI dans un MAC-i PDU incluant le MAC-i PDU contenant les dernières données CCCH disponibles au niveau de l'UE (16), si l'autorisation de desserte actuelle de l'UE (16) n'autorise pas le MAC-i PDU contenant les dernières données CCCH inclure aussi le SI.

6. Procédé (300) selon une quelconque des revendications précédentes, dans lequel la libération (306) des ressources E-DCH communes en réponse à la transmission du SI comprend de libérer les ressources E-DCH communes après la transmission du SI et après qu'un dernier processus de demande de répétition automatique hybride HARQ s'exécutant sur l'UE (16) a émis un accusé de réception ou un nombre maximal prédéfini de retransmissions par l'UE (16) a été atteint.

7. Equipement d'utilisateur UE (16) configuré pour fonctionner dans un réseau de communication sans fil (10) et comprenant :
des circuits d'émetteur-récepteur (32) pour transmettre des signaux au réseau de communication sans fil (10) et recevoir des signaux provenant du réseau de communication sans fil (10) ; et
un ou plusieurs circuits de traitement (18) qui sont associés opérationnellement aux circuits d'émetteur-récepteur (32) et configurés pour :
déclencher une transmission d'information de programmation SI vers le réseau de communication sans fil (10) lors de la transmission par l'UE (16) utilisant des ressources de canal dédié amélioré communes E-DCH des dernières données de canal de commande commun CCCH connues disponibles au niveau de l'UE (16), ledit déclenchement étant fait sans tenir compte de ce que ou non un statut de mémoire tampon total E-DCH, TEBS, de l'UE (16) est zéro ;
rapporter le TEBS de l'UE (16) comme zéro dans le SI transmis au réseau de communication sans fil (10), sans tenir compte de ce que le TEBS de l'UE (16) est zéro ; et
libérer les ressources E-DCH communes en réponse à la transmission du SI.

8. UE (16) selon la revendication 7, dans lequel le ou les circuits de traitement (18) sont en outre configurés pour mettre en mémoire tampon, le cas échéant, les données de canal de trafic dédié, DTCH, et les données de canal de commande dédié, DCCH, dans une mémoire tampon E-DCH que met aussi en mémoire tampon les dernières données CCCH, de sorte que le TEBS ne sera pas zéro quand la transmission du SI est déclenchée, dans la mesure où la mémoire tampon E-DCH inclut n'importe quelles données DTCH ou DCCH.

9. UE (16) selon la revendication 7 ou 8, dans lequel le ou les circuits de traitement (18) sont configurés pour déclencher la transmission du SI vers le réseau de communication sans fil (10) lors de la transmission d'un MAC-i PDU contenant les dernières données CCCH disponibles au niveau de l'UE sans tenir compte de ce que ou non le TEBS de l'UE (16) est zéro.

10. UE (16) selon la revendication 9, dans lequel le ou les circuits de traitement (18) sont en outre configurés pour, en réponse à la transmission du dernier MAC-i PDU, indiquer à une entité de couche de commande de liaison radio RLC au niveau de l'UE (16) qu'aucun PDU pour chaque canal logique ne devrait être transféré à la couche MAC, dès qu'une mémoire tampon MAC-c contient zéro octets.

11. UE (16) selon une quelconque des revendications 7 - 10, dans lequel le ou les circuits de traitement (18) sont configurés pour inclure le SI dans le MAC-i PDU contenant les dernières données CCCH disponibles au niveau de l'UE (16), si une autorisation de desserte actuelle de l'UE (16) autorise le MAC-i PDU à inclure le SI, et inclure le SI dans un MAC-i PDU incluant le MAC-i PDU contenant les dernières données CCCH disponibles au niveau de l'UE (16), si l'autorisation de desserte actuelle de l'UE (16) n'autorise pas le MAC-i PDU contenant les dernières données CCCH à inclure aussi le SI.

12. UE (16) selon une quelconque des revendications 7 - 11, dans lequel le ou les circuits de traitement (18) sont configurés pour libérer les ressources E-DCH communes en réponse à la transmission du SI, en libérant les ressources E-DCH communes après la transmission du SI et après qu'un dernier processus de demande de répétition automatique hybride HARQ s'exécutant sur l'UE (16) a émis un accusé de réception ou un nombre maximal prédéfini de retransmissions par l'UE (16) a été atteint.
